# EUROPEAN PATENT APPLICATION

(11) **EP 4 205 843 A1**
(43) Date of publication of application: **05.07.2023**
(21) Application number: 21218363.6
(22) Date of filing: 30.12.2021
(51) Int. Cl.: B01J 8/00, B01J 8/02, B01J 23/745

(54) **INDUCTIVE HEATING REACTORS**

(71) Applicant: Nederlandse Organisatie voor Toegepast-Natuurwetenschappelijk Onderzoek TNO, 2595 DA Den Haag (NL)
(72) Inventor: Boon, Jurriaan, 2595 DA The Hague (NL); James, Jebin Duthie, 2595 DA The Hague (NL); Sebastiani, Francesco, 2595 DA The Hague (NL); Raida, Marie, 2595 DA The Hague (NL); Twerda, Aris, 2595 DA The Hague (NL); Elzinga, Gerard Douwe, 2595 DA The Hague (NL)
(74) Representative: Nederlandsch Octrooibureau

(57) **Abstract**

The invention concerns the use of one or more heating structures within a reactor for inductive heating, which greatly improves the heating within the reactor. Placing a heating structure according to the invention results in a more homogenous temperature distribution throughout the reactor interior, which may lead to higher yields, better selectivities, faster adsorbent regeneration, reduced catalyst degradation rates and higher heating rates. The heating structure is formed by connected strands of material wherein the strands have a diameter of 0.5 - 100 mm, the network comprises areas that are susceptible to induction heating, the volume of the total heating structures comprised in the reactor is less than 20 vol.% of the total empty reactor volume, at least a part of the network is formed by strands with a thermal conductivity of 10 W·m⁻¹·K⁻¹ or more at the operating temperature of the reactor.

## Description

### Field of the invention

The present invention relates to field of reactors for performing chemical reactions that require heating, specifically to a reactors heated by induction heating.

### Background art

Industrial scale chemical reactions are performed in reactors that often require heating.

Resistive heating is the process of generating heat in an electrically conductive materials by passing an electric current through the material, wherein the electric current is directly applied to the conductive material. Reactor systems wherein the catalyst is heated using resistive heating are known, for example from WO2019228798. WO2019228798 describes a structured catalyst comprising a 3D macroscopic structure supporting a ceramic catalyst coating. An electric current is passed through the macroscopic structure, thereby heating the structure by resistive heating and indirectly the catalyst via thermal contact with the structure.

Induction heating (or inductive heating) is also a process of generating heat in an electrically conductive materials by passing an induced electric current (or secondary current) through the material (i.e. Eddy energy losses). However, induction heating is different from resistive heating in that the current is generated by a rapidly alternating magnetic field penetrating the material (electromagnetic induction). The electric currents thus generated are called Eddy currents. Additionally, heating of ferromagnetic materials can be achieved with an alternating magnetic field, as this rotates the magnetic moments of the material's atoms (magnetization or ferromagnetic energy losses) or causes hysteresis (i.e. hysteric energy losses). Reactor systems wherein the catalyst is heated using induction heating are known in the art, for example from WO2017036794 and WO2019108254. A rapidly alternating magnetic field is generated by an induction coil that is typically wound around the reactor. Ideally, the catalyst inside the reactor would be made of material susceptible to inductive heating, such that it can be targeted directly by induction heating. However, from a materials perspective this is difficult to achieve. Therefore, the catalyst is typically contacted with a structure susceptible to induction heating, for example the wall of the reactor. The heat is then transferred to the catalyst via thermal conduction.

A problem encountered using induction heating is to efficiently and homogeneously heat the catalyst in the entire reactor. For example, a cylindrical reactor column filled with catalyst particles will be difficult to heat efficiently using induction heating on the column wall, as the heat will have difficulty to get into the core of the reactor along the radial direction. This is due to the heat flowing through a reducing cross-sectional area, which increases the thermal resistance. Generally, the path from the material that is inductively heated to the catalyst material can be too long, or have too small heat transfer area, for efficient heat transfer by thermal conduction. A solution in the prior art is to coat the catalyst onto the surface of the material that is inductively heated, such that heat transfer by thermal conduction is over a short distance and large cross-sectional area. The catalyst material is in close proximity to the heated material and homogeneously distributed with large heat transfer area, making heat transfer more efficient

WO2017036794 describes a reactor unit comprising one or more ferromagnetic macroscopic supports susceptible for induction heating. The macroscopic supports are provided with a catalyst coating. The macrostructure has a number of channels, which may be straight-channelled or a cross-corrugated element. The dimensions of the macroscopic support are typically in the range of cm, between about 0.5 cm and about 15 cm, but larger sizes up to about 50 cm, are also conceivable. WO2019108254 describes a reactor with a core having a plurality of flow channels. Catalyst particles may either be packed within monoliths or coated onto the wall surface of the monoliths. The microchannels have a wall-to-wall (not counting catalyst) dimension of 2.0 mm or less, even as small as 50 to 500 µm.

However, a major downside resides in the preparation of the magnetically susceptible catalyst material. Coating of the catalyst onto particles or structures that can be inductively heated may be difficult and is not possible for all catalyst and support materials. Enhancing the catalyst itself, for example by adding magnetically susceptible nanoscale particles, poses challenges in terms of retaining catalyst activity and preventing unwanted catalytic effects (side reactions). A second downside is that homogenously distributed susceptible materials will not generate heat homogenously within chemical reactors, which are typically cylindrical (sometimes squared and other shapes) tubes and vessels. The electromagnetic field will penetrate the reactor only to a certain depth. This means that when a column reactor is homogeneously filled with a susceptible material (by particles, pellets or homogenous structure like a monolith), only the most outer fraction of the material will be generating most of the heat, to the point that near the reactor core no heat generation may occur at all. This heat as then to travel to the core, like when the wall was used to generate heat, experiencing the same heat transfer limitations. A trade-off between maximizing the heat transfer area vs. the heating efficiency (i.e. place the susceptible material in optimal location within the reactor) exists. A third downside is that the efficiency of inductive heating of nanoscale particles is limited by the small diameters of these particles. In order to have efficient heat generation, coil and reactor sizes would be required that may not match the requirements of industrial application like chemical reactions.

The present invention provides in the need for efficient heating of the entire catalyst system within a reactor by induction heating, and avoiding the problems associated with coating the catalyst or sorbent onto susceptible particles or combining susceptibility and chemical reactivity within a single material.

### Summary of the invention

The inventors surprisingly found that a structured arrangement within a reactor for inductive heating greatly improves the heating within the reactor. Placing a heating structure according to the invention results in a more homogenous temperature distribution throughout the reactor interior, which leads to higher yields, better selectivities, faster adsorbent regeneration, reduced catalyst degradation rates and higher heating rates. The present invention thus provides in the need for efficient heating of the entire catalyst system within a reactor by induction heating, by balancing the penetration depth of the heat generation within the reactor core by placing the susceptible material not homogenously but in specific reactor locations (e.g. near its radial core), the efficiency of heat generation on the susceptible material by tuning the size of the susceptible material beyond nanoparticle scale so that feasible coil sizes and operating parameters (e.g. voltage & frequency, for industrial applications can be achieved, and the efficiency of heat transfer by tuning the distance, heat transfer area and heat transfer medium between the susceptible material to the solid material (e.g. catalyst or sorbent).

Thus, the invention concerns a reactor system comprising a reactor and an inductive heating coil surrounding the reactor wherein the coil is suitable for generating an alternating magnetic field within the reactor when powered by a power source that supplies an alternating current, wherein the reactor interior comprises a solid selected from a catalyst, a sorbent, a solid reactant or a combination thereof, and one or more heating structures formed by connected strands of material wherein:
- the strands have a diameter of 0.5 - 100 mm,
- the network comprises areas that are susceptible to induction heating,
- the volume of the total heating structures comprised in the reactor is less than 20 vol.% of the total empty reactor volume,
- at least a part of the network is formed by strands with a thermal conductivity of 10 W·m⁻¹·K⁻¹ or more at the operating temperature of the reactor.

In a second aspect, the invention concerns the use of one or more heating structures for heating a reactor having an inductive heating coil surrounding the reactor wherein the coil is suitable for generating an alternating magnetic field within the reactor when powered by a power source that supplies an alternating current, wherein the reactor interior comprises a solid selected from a catalyst, a sorbent, a solid reactant or a combination thereof, and wherein the heating structure is formed by connected strands of material wherein:
- the strands have a diameter of 0.5 - 100 mm,
- the network comprises areas that are susceptible to induction heating,
- the volume of the total heating structures comprised in the reactor is less than 20 vol.% of the total empty reactor volume,
- at least a part of the network is formed by strands with a thermal conductivity of 10 W·m⁻¹·K⁻¹ or more at the operating temperature of the reactor.

In a third aspect, the invention concerns a process for performing a chemical or physical reaction or an absorption process, wherein the process is performed within the reactor system according to the first aspect, wherein the process involves supplying heat to the reactor by generating an alternating magnetic field within the reactor by powered the heating coil.

### Description of the figures

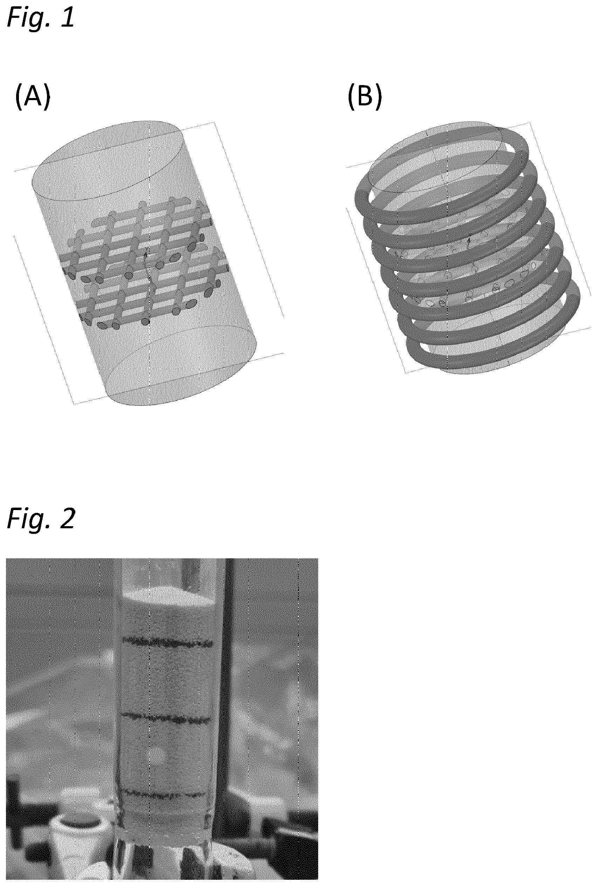

Figure 1 shows a preferred embodiment according to the invention, with 2-dimensional heating structures placed at regular intervals in the interior of a cylindrical reactor (Fig. 1(A)). The total number of heating structures may depend on the size of the reactor. A heating coil is placed around the reactor (Fig. 1(B)), which is able to generate an alternating magnetic field within the reactor when powered by a power source that supplies an alternating current. Upon exposure to the magnetic field, the heating structure, which is made from a material that is susceptible to induction heating, will heat to the desired temperature, which will in turn heat the entire content of the reactor by conductive heating.
Figure 2 shows the laboratory set-up reactor used in Example 2. The heating structures are visible as darker horizontal disks in between the lighter coloured solid (hydrotalcite). The light dot in between the first and second heating structure (counted from the bottom) depicts the position of pyrometer temperature measurement.

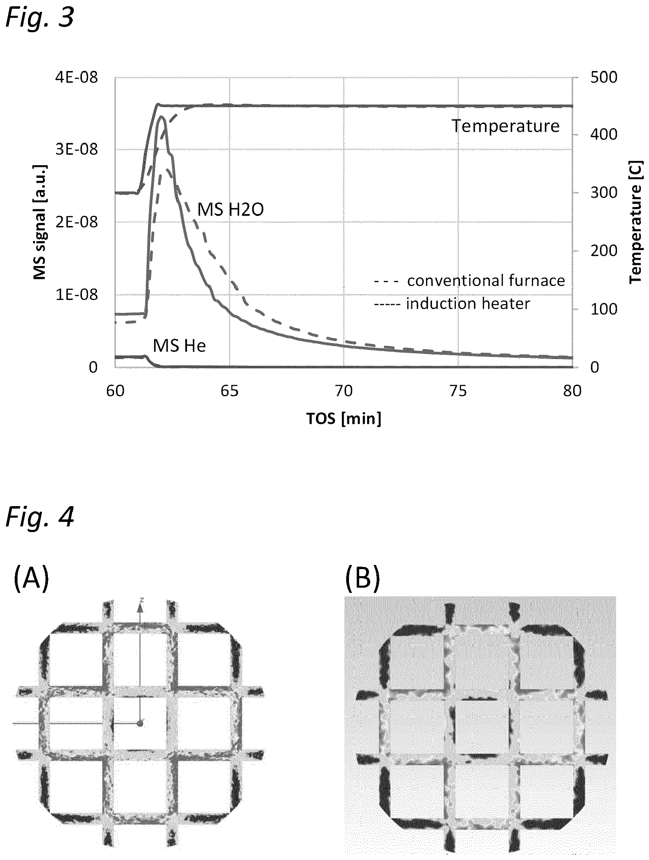

Figure 3 shows the results of the proof-of principle desorptive test (Example 2) with induction heater (solid lines) and conventional furnace (dotted lines). Curves for the temperature, and the MS results for H₂O and helium are given. The induction heater case releases the adsorbate in approximately half the time than conventional furnace.
Figure 4 depicts the CFD simulations of a Fe grid in the reactor. The top views of heat generation rate (Fig. 4(B) in W/m³) and magnetic power loss (Fig. 4(A) in W/m³) are depicted. The central loop is shielded by the 4 loops directly adjacent, showing the known shielding effect that reduces penetration depth. However, it is clearly shown that the open branches experience the lowest level magnetic coupling (not being part of loops). Consequently the heat is generated relatively at the centre of the reactor and distributed throughout the reactor via these branches, enabling the optimization of efficient heat generation and heat distribution.

### Detailed description

The invention concerns a reactor system, as well as a process for performing a chemical or physical reaction or separation process in the reactor system according to the invention, and the use of heating structures within the reactor system according to the invention. All defined herein for the reactor system according to the invention equally applies to the process according to the invention and the use according to the invention, and vice versa.

### The reactor system

In a first aspect, the invention concerns a reactor system, comprising a reactor, an inductive heating coil surrounding the reactor and a power source that supplies an alternating current. The inductive heating coil is suitable for generating an alternating magnetic field within the reactor when powered by the power source. Such a configuration is known for induction heating and may take any form, shape and size known in the art. The reactor itself may also take any form, shape and size known in the art. Typically, the reactor takes the form of a cylindrical column. In view of the improved heating according to the invention, the size of the reactor is not limited. The invention can deal with reactor diameters up to 4 meter or even bigger. In a preferred embodiment, the reactor interior is cylindrically shaped and has a diameter up to 4 meter.

The reactor has an interior wherein a chemical or physical reaction or separation process may occur. As will be understood by the skilled person, the reactor typically has one or more inlets for receiving a feed and one or more outlets for discharging a product. The nature of the feed, the product and the reaction that occurs within the reactor is irrelevant in the context of the present invention. The interior of reactor is heated by the induction heating, which may be in view of the endothermic nature of the chemical or physical reaction or separation process, but could also be for other reasons, such as catalyst activation, start-up of a non-endothermic reaction (exothermic or autothermal reaction), sorbent activation. Examples of reactions and separation processes that would benefit include, but are not limited to, reverse water-gas shift, steam or dry reforming (of methane, hydrocarbons, oxygenates, etc.), gasification, pyrolysis, calcination reactions, dehydrogenation of hydrocarbons, evaporation, temperature-swing adsorption, and pressure-swing adsorption processes.

A preferred reaction type that is to be performed in the reactor is sorption-enhanced reactions, wherein one product of the chemical reaction is removed from the equilibrium mixture which consequently pushes the equilibrium towards the product side. Such reactions typically benefit from heat supply during the regeneration of the adsorbent, which may be conveniently applied by induction heating. In order to utilize all adsorption sites on the adsorbent, homogenous heating of the reactor interior is required. This is offered by the present invention.

The interior of the reactor comprises a solid that needs to be heated for proper operation of the reaction. The solid may be a catalyst, a sorbent, a reactant, or a combination of two or all three thereof. The material of the solid is not susceptible to induction heating itself, but to heating by thermal conduction. In a preferred embodiment, the solid is a catalyst and/or a sorbent. Typically, the solid is present in the form of particles, such as in fixed bed reactors, moving bed reactors, rotating bed reactors, fluidized bed reactors or slurry reactors. As such, the solid material is perfectly compatible with the heating structures that are also present in the reactor interior. The material of the solid is preferably not electromagnetically shielding, such as may be the case for electronically conducting and/or magnetic materials. Thus, in a preferred embodiment, the material of the solid is not electronically conducting and/or ferromagnetic. Typical solid materials include heterogeneous catalysts and adsorbents such as metal chlorides, metal oxides, zeolites (aluminosilicates), silica gel, (activated) carbon, polymers, or mixtures thereof, including materials that are partially composed thereof.

### The heating structure(s)

The presence of heating structure within the reactor interior is the crux of the present invention. The heating structure may be a single heating structure that stretches out throughout the entire reactor interior or can be a plurality of heating structures that are each located at a specific location within the reactor interior. The heating structure is at least in part formed by a material that is susceptible to induction heating. In other words, at least part of the heating structure is able to generate heat through electromagnetic induction. Any material that is susceptible to induction heating is suitable in the context of the present invention, including ferromagnetic material, and materials wherein eddy current may form, and materials susceptible to hysteresis. In one embodiment, the material is ferromagnetic, such as transition metals (e.g. iron, nickel, cobalt), their alloys or oxides, and alloys or oxides of rare earth metals. Alternatively, the material is not ferromagnetic but serves to generate eddy currents in the magnetic field, such as carbon (graphite, black carbon) or copper. Combinations of susceptible materials are also envisioned in the context of the present invention. In one embodiment, the material of the heating structure is chemically inert in the reaction that is to be performed within the reactor interior.

The entire heating structure should be thermally connected, or may be composed of several thermally connected substructures. Thus, the parts of the heating structure that are not formed by a material that is susceptible to induction heating should be thermally conductive. Preferably, no insulating material is present in the heating structure, although having small parts of insulator would not jeopardize the overall working of the invention. As such, the heat that is generated in part(s) that is/are susceptible to induction heating is easily transferred throughout the entire heating structure by thermal conduction. The thermal conductive parts of the heating structure, if present, should have a thermal conductivity of at least 10 W·m⁻¹·K⁻¹ at the operating temperature of the reactor, preferably at least 25 W·m⁻¹·K⁻¹, or even at least 50 W·m⁻¹·K⁻¹. Any thermally conductive material is suitable in the context of the present invention, and is preferably selected from copper, aluminium, iron or steel, carbon, or a combination thereof. Herein, the thermally conductive material is not susceptible to induction heating. The combination of material that is susceptible to induction heating and thermal conductive parts ensures that the entire heating structure is heated when subjected to electromagnetic induction. The heating structure is then able to transfer its heath to the solid within the reactor interior by thermal conduction. In view of the nature of the heating structure, the solid will always be in close proximity to a part of a heating structure, such that the pathway for thermal conduction to heat the solid is always short. The presence of the heating structure within the reactor interior this ensures that homogeneous heating of the entire reactor interior is efficiently achieved.

In a preferred embodiment, the heating structure comprises 30 - 100 wt% of a material that is susceptible to inductive heating, preferably either ferromagnetic or provides heating through eddy currents (i.e. electrical conductor) and 0 - 70 wt% thermally conductive material, wherein the sum of susceptible material and thermally conductive material is 100 wt%. More preferably, the heating structure comprises 50 - 100 wt% ferromagnetic material and 0 - 50 wt% thermally conductive material.

The heating structure is formed by connected strands of material. These strands have a diameter in the range of 0.5 - 100 mm, preferably 0.5 - 20 mm, more preferably in the range of 1 - 15 mm, most preferably in the range of 2 - 10 mm. Such a thickness allows perfect interaction between the solid and the strands in order to transfer the heat from the strands to the solid by thermal conduction. The skilled person understand that the optimal diameter of the strands may vary depending on the size of the reactor In addition to these strands, the heating structure may have further elements which connect the strands, such as rods or beams. In one embodiment, such elements are susceptible to induction heating and the strands connected to the elements are thermally conductive. Preferably, the strands are connected to one or more ferromagnetic rod or beam.

For example, a heating structure may contain a central element, preferably a hollow cylinder (or square) that can host eddy currents, or a ferromagnetic rod or beam, which is oriented in the same direction as the length of the reactor, which is susceptible to induction heating, and connected to that central element are thermally conductive strands that transfer the heat generated at the central element to all parts of the interior of the reactor. The diameter of such a central element may be larger than defined above for the strands.

For the functioning of the invention, it is irrelevant whether the strands or the other elements are susceptible to induction heating or thermally conductive, as long as the different parts of the heating structure are in thermal connection. Ideally, the strands do not magnetize significantly, which may because they are not susceptible to indicative heating (but they are thermally conductive). Alternatively, if susceptible strands are connected to the loops susceptible to indicative heating, the loops will magnetize to a much higher extent then the strands.

The heating structure has wide pathways for the solids and molecules of the feed and/or product to pass through the reactor interior unhindered. The heating structure that is defined by the interconnected strands typically has a chicken-wire type structure, with large holes between the interconnected strands. Preferably, the interconnected strands form closed loops. The presence of such closed loops is especially preferred in case the material of the strands to form the loops are susceptible to induction heating. Especially preferred materials include iron, carbon and copper. Such induction heating loops provide for a very efficient heating of the reactor interior and the solids therein. Loops location and shapes can be flexibly modified to balance between heat generation and heat transfer efficiencies, so to achieve optimal overall reactor heating. An especially preferred configuration has one or more loops centrally located in a 2-dimensional heating structure, with strands extending outward from the centrally located loops. Such a 2-dimensional heating structure can be placed in a cylindrical reactor perpendicular to the length of the cylinder. As such, the centrally located loops will be positioned at or near the radial core of the reactor.

In order to allow free passage of all materials present in the reactor interior, the area of the open spaces formed by those closed loops, which are also referred to as cells, are preferably in the range of 1.0 and 10,000 mm², more preferably in the range of 50 and 1,000 mm². In an especially preferred embodiment, those closed loops are connected to a rod or beam as defined above. The skilled person will understand that the optimal area of the cells enclosed by the closed loops depends on the size of the solid particles that are present within the reactor. Thus, in a preferred embodiment, the average diameter of the solid particles is at least a factor 2 smaller than the average diameter of the cells of the heating structure(s), preferably this factor is at least 5, most preferably at least 10. The cells that are formed by the closed loop of interconnected strands may have any shape. In a preferred embodiment, the shape is selected from the list consisting of circular, ellipsoidal and polygonal, preferably from the list consisting of circular, ellipsoidal, square, pentagonal, hexagonal, heptagonal and octagonal, most preferably a square or hexagonal shape. Those shapes allow for optimal distribution of the cells especially in case the heating structure is 2-dimensional. As such, a chessboard-like or graphene-like structure can be envisioned, with the strands forming the edges of the cells.

The heating structure takes up very little space within the interior of the reactor. The interior of the reactor is still almost exclusively formed by the solid, preferably in the form of particles. As such, the reactor can be operated in conventional ways, wherein a flow of a feed is effected through the solid within the reactor in such a way that contact between the feed and the solid is optimal. Thus, the total volume of the heating structure, comprising stands and optional further elements, that is present within the interior of the reactor is less than 20 vol.% of the total empty reactor volume, preferably less than 10 vol.% or even less than 5 vol.%. In one embodiment, the total volume of the heating structure is in the range of 0.1 - 20 vol.% of the total empty reactor volume, preferably 0.5 - 10 vol.%, more preferably 1 - 5 vol.%.

The heating structure(s) can take any form, as long as it is interconnected and spreads out within the interior of the reactor. Preferably, the heating structure(s) are positioned such that the maximum distance between the solid within the reactor and the nearest part of the heating structure(s) is 25 cm or less, preferably 10 cm or less.

In one embodiment, the heating structure is a 2-dimensional network of the strands, such as a mesh or chicken-wire-type network. In order to achieve the desired minimal distance between the solid and the heating structure, the reactor interior comprises more than one of such 2-dimensional networks. The desired amount of such 2-dimensional networks is dependent on the size of the reactor. For example, a vertical column reactor may contain horizontally placed heating structures at a fixed interval. Preferably, they are placed at least 5 mm apart, more preferably at least 15 mm apart, most preferably 20 mm - 20 cm apart.

In an alternative embodiment, the heating structure is a 3-dimensional network of the strands and optionally other elements. The reactor interior may contain a single 3-dimensional network or multiple 3-dimensional networks, depending on the size of the 3-dimensional network and of the reactor interior.

The skilled person is able to define the spatial arrangement of the heating structure(s) in such a way that the interior of the reactor is sufficiently accessed by the heating structure(s). In one embodiment, the heating structure(s) are spatially arranged within the reactor interior such that the temperature in the reactor is within a bandwidth of 40 K, preferably within 20 K, more preferably within 10 K.

Since the present invention offers a marked advantage over coating the solid onto particles susceptible to induction heating, it is not needed that the solid is coated onto the heating structure. Thus, in one embodiment, the solid is not coated onto the heating structure.

The use of the heating structure as defined above within an induction heating reactor improves the heating within the reactor interior, in particular of the solid(s) present within the reactor interior. Such improved heating resides in a more homogenous temperature distribution throughout the reactor interior, and higher core temperature than surface temperature. In a preferred embodiment, the temperature in the reactor is within a bandwidth of 100 K, preferably within 60 K, more preferably within 30 K, even more preferably within 20 K, most preferably within 10 K. Such narrow temperature distributions are unprecedented in the art, especially when the solid is not coated on a material that is susceptible to induction heating. In an alternative embodiment, the actual temperature is within the bandwidth as defined above from the desired temperature in the reactor, which may vary throughout the reactor interior. For example, a temperature gradient is efficiently created in the reactor according to the invention, wherein the heating structure(s) ensure(s) that the local temperature at a given location within the reactor is very close to the desired temperature, and any desired variation in temperature in the reactor is accurately established.

### Further aspects

In a second aspect, the invention concerns a process for performing a chemical or physical reaction or separation process that requires heating. The process according to the invention is performed in the reactor according to the invention. In a preferred embodiment, the process is a sorption-enhanced chemical reaction such as the sorption-enhanced reverse water gas shift reaction, sorption-enhanced water-gas shift, or sorption-enhanced DME synthesis, or a temperature-swing adsorption or regeneration process. The skilled person knows how to perform such reaction in induction heating reactors. The process involves supplying heat to the reactor by generating an alternating magnetic field within the reactor by powered the heating coil.

The invention can also be worded as the use the heating structure as defined herein above for improving the heating in an induction heating reactor. Such improved heating results in a more homogenous temperature distribution throughout the reactor interior, that can induce benefits in terms of higher yield, better selectivity, faster adsorbent regeneration and reduced catalyst degradation rate. It also provides faster heating rates desired in transient operation. In a preferred embodiment, the temperature in the reactor is within a bandwidth of 100 K, preferably within 60 K, more preferably within 30 K, even more preferably within 20 K, most preferably within 10 K of the desired temperature. Such narrow temperature distributions are unprecedented in the art, especially when the solid is not coated on a material that is susceptible to induction heating. The invention is particularly suited for establishing well-defined temperature gradients within a reactor.

### Examples

The invention is illustrated by the following examples.

### Example 1 - screening tests

Screening tests were performed to identify the most promising configuration to integrate sorbent/catalytic materials with induction susceptible material. 5 grams of material was tested within an induction set-up reactor. The set-up included a 380 A; 2.3 kW; 260 kHz inductor with a water-cooled coil. Solids were loaded into a ceramic cup that was placed at the centre of the coil at ambient conditions. No gases were added to the system in these tests. Temperature was measured with both a thermal camera and pyrometer. At this small scale, two approaches were tested: (i) mixing of sorbent/catalyst and susceptible particles and (ii) impregnation of susceptible material on sorbent/catalyst. Tested materials and composition are given here:
Mixing hydrotalcite (HTC) and susceptible particles:
   - Graphite mixed with HTC -15 wt%
   - Fe mixed with HTC -15 wtT (Fe particles diameter < 200 microns and > 200 microns)
   - Fe₂O₃ mixed with HTC -15 wt%
HTC Impregnation:
   - Fe - 15 wt% on HTC sorbent
   - FePt on HTC sorbent
   - 4 wt% Co + 4.5 wt% Ni on HTC sorbent
First screening tests were conducted using:
   - 15% Fe mixed with HTC (microparticles, diameter less than 200 microns)
   - 15% Graphite mixed with HTC (microparticles, diameter less than 200 microns)
   - 15% Fe impregnated on HTC (nanoparticle)

The Fe mixed with HTC sample reached 150 °C after 300 s. The other samples did not show any heating response. It was thus likely that the mixed Fe particles were heated only by ferromagnetic losses, without significant eddy currents generation due to the small particle diameter used. Mixed HTC graphite sample suffered from the same problem, as secondary currents could not be induced within graphite particles. Also, Fe impregnation was not effective.

Following these results, additional testing was conducted. The tests and respective results are shown in Table 1. Impregnated nanoparticle following literature receipt (Ni/Co) could be heat up, but heating degraded the material. Fe₂O₃ was not responsive, being both not electrically conductive and magnetic susceptible. The best results were achieved with mixed Fe-HT particles at larger Fe particle diameters (> 250 microns), achieving 400 °C in 1-2 minutes. Both thermal camera and pyrometer indicated similar results. This increased heating rate can be explained by the improved coupling between the induction coil and the susceptible particles with these larger diameters, which allow the formation of eddy currents within the iron particles and greater penetration depth of the magnetic field within the reactor column. Consequently, more rapid and more uniform heating of the sorbent bed was observed. The rapid heating effect is even greater when a small iron wire is used, reaching 400 °C in few seconds. However, the bed temperature was measured to be 90 °C lower, indicating that more wires may be required to improve heat transfer.

**Table 1 - 2^{nd} screening test results**

| | | |
|---|---|---|
| 15%Fe203/KMG-30 | Mixed Fe203 powder | Fe203 is not magnetic; no interaction with EM and no interaction with magnet; |
| 15Fe203-KMG-30 | Impregnated Fe; Reduced | Interacted with EM. but slowly (reached 53°C in 3 min) |
| 18Ni/12Co-KMG-30 | Impregnated; Reduced | Reached 600 ° C in 15-16 sec, possibly over that due to inaccurate temperature measurement. Material lost its properties after that. Some of it changed color. |
| 5Ni5Co-KMG-30 | Impregnated: Reduced | Used temperature control Reached 400 °C in 10 sec. Kept it on 400 °C for 2 min but then it started to loose magnetic properties and temperature started to drop. A lot of material changed to gray color. |
| 30-Fe-KMG-30 (250-300 um) | Mixed | Temperature measurement was inconsistent Both camera and pyrometer were set to emissivity of 1. After 1.30 min we reached limit of thermal camera (250°C) but after that in didn't reach lower limit of pyromether (383.5 °C) after 5min. After changing emissivity to 0.6 (for white material) it showed that we are at 400 °C already. |
| 30-Fe-HTC-2 (>300um) | Mixed | Reached 400 °C after around 2min based on pyrometer measurements. Considerable difference was noticed based on spot where the measurement was taken |
| Wire | | Pyromether showed 400°C after already few seconds, however thermal camera was still showing only 90°C. |

### Example 2 - Proof of principle

Proof-of-principle testing were conducted using a ∼2.3 kW inductively heated set-up (see Figure 2). The set-up includes a quartz reactor that can also be loaded with 5 grams of solid, but also fed with gases to carry out chemical reactions or adsorption/desorption at high temperature (up to 500 dgC) and ambient pressure Desorption tests were conducted with the same amount of susceptible and sorbent materials across all experiments, with solid particles of hydrotalcite sorbent and iron particles of the heating structure (ferromagnetic susceptible material) mixed or arranged in layers (see Figure 2 for the layered configuration). An example of the comparison with conventional heated tests can be seen in Figure 3. The results on power and time needed to reach the desired temperature (400 °C in this example) are given in Table 2 below. The time refers to the period in between a measured temperature of 200 °C and a measured temperature of 400 °C. Due to the greater heat transfer coefficient, induction heating was able to increase the temperature of the bed more rapidly, achieving a larger average temperature over time. Consequently the same amount of adsorbate is released more rapidly with induction heating, indicating lower desorption time requirements and the heating rate limits the desorption rate. It was observed that the induction heater released the same amount of adsorbate than the conventional furnace in approximately half of the time (Figure 3). When the duration of the desorption step is limiting the total cycle time, the total cycle time may be reduced by 50 % when induction heating is applied. As such, doubling of the system productivity (mol-adsorbate/kg-sorbent/hr-cycletime) can be achieved, evidencing the reduction in CAPEX of the present invention technology.

**Table 2 - Power and time needed to reach 400 °C with different configurations**

| **Configuration of reactor interior** | **Power (W)** | **Time (s)** |
|---|---|---|
| mixed (250 - 300 µm Fe particles) | 860 | 80 |
| mixed (> 300 µm Fe particles) | 700 | 55 |
| layered (see Figure 2) | 215 | 33 |

When different configurations are tested, the layered configuration of Fe particles and sorbent particles proved to achieve the faster heating rate (363 °C per minute, consuming 0.2 kW). The larger Fe particles are observed to have better coupling, with higher heating rate at lower power consumption, as shown for the two test with a mixed configuration. However, significant improvement was achieved when the Fe particles are clustered together, creating a more effective magnetic core, in line with the heating structures of the present invention. Basically, a single layer would be limited by heat transfer, but shows the best magnetic coupling (most efficient heat generation). A homogenous distribution would be limited by poorer coupling and lower effective use of the susceptible material. A number of layers is expected to be the optimum. Only particle layers could be tested at the small diameter of the set-up.

### Example 3 - Modelling

A modelling experiment was performed to validate the experimental findings. The model is created in Ansys Fluent and Ansys Maxwell packages, enabling simulation of heat, electromagnetic and material flows, using different shapes for the inductively heated material.

The use of structured magnetic cores is an effective solution to achieve greater coupling and homogenous heat distribution, especially when upscaling the process. A concept was developed and simulated, whereby the magnetic core structure is designed to achieve the greatest coupling and heat generation at the centre of the reactor column. It was shown that a grid with closed loops, made by Fe or Cu, where the closed loops are at the centre of the reactor, gave excellent results. As shown in Figure 4, when this structure is in place, the central loops will be heated by inductive heating. This overcomes the well-known problem of magnetic field penetration within reactor of larger diameter, when inductive material is homogenously used within the reactor. In that case, only the outer layer of the reactor is heated. The heat will then need to flow inward radially by conduction, which is less effective as the radial cross sectional area reduces, thereby increasing the heat transfer resistance. Conversely, the approach of the present invention focuses on generating heat in the reactor core, which then needs to flow outwards through a lower heat transfer resistance. Furthermore, the closed loops can be complemented with non-closed branches, that are not or less magnetically inductive near the reactor outer surface. These branches effectively distributed the generated heat, given the high thermal conductivity of Fe or Cu, and shown by the simulations in Figure 4.

Figure 4 depicts the CFD simulations of a Fe grid in the reactor. This top view shows how the 4 mid loops experience the highest heat generation rate (Fig. 4(B), W/m³) and magnetic power loss (Fig. 4(A), W/m3). The central loop is shielded by the 4 loops directly adjacent, showing the known shielding effect that reduces penetration depth. However, it is clearly shown that the open branches experience the lowest level magnetic coupling (not being part of loops). Consequently the heat is generated relatively at the centre of the reactor and distributed throughout the reactor via these branches, enabling the optimization of efficient heat generation and heat distribution.

## Claims

1. Reactor system comprising a reactor and an inductive heating coil surrounding the reactor wherein the coil is suitable for generating an alternating magnetic field within the reactor when powered by a power source that supplies an alternating current, wherein the reactor interior comprises a solid selected from a catalyst, a sorbent, a solid reactant or a combination thereof, and one or more heating structures formed by connected strands of material wherein
- the strands have a diameter of 0.5 - 100 mm,
- the network comprises areas that are susceptible to induction heating,
- the volume of the total heating structures comprised in the reactor is less than 20 vol.% of the total empty reactor volume,
- at least a part of the network is formed by strands with a thermal conductivity of 10 W·m⁻¹·K⁻¹ or more at the operating temperature of the reactor.

2. The reactor system according to claim 1 wherein the heating structures are not coated with the catalyst and/or the adsorbent and the strands and elements are chemically inert.

3. The reactor system according to claim 1 or 2 wherein the areas that susceptible to induction heating are closed loops formed by ferromagnetic and/or electrically conductive strands, wherein the size of the cells enclosed by the closed loops is between 1.0 and 10,000 mm².

4. The reactor system according to any one of the preceding claims wherein the heating structures comprises one or more elements that are susceptible to induction heating, preferably wherein the element are ferromagnetic rods.

5. The reactor system according to any one of the preceding claims wherein the whole network is formed by strands with a thermal conductivity of 50 W·m⁻¹·K⁻¹ or more at the operating temperature of the reactor.

6. The reactor system according to any one of the preceding claims wherein the heating structure is a 2-dimensional network and the reactor comprises more than one of such 2-dimensional network.

7. The reactor system according to claim 6 wherein the more than 1 of 2-dimensional network are positioned at least 5 mm apart.

8. The reactor system according to any of claims 1 - 5, wherein the heating structure is a 3-dimensional network.

9. The reactor system according to any one of the preceding claims wherein the heating structures consists of ferromagnetic and/or electrically conductive strands and optionally one or more ferromagnetic rods, which are connected to the strands having a thermal conductivity of 50 W·m⁻¹·K⁻¹ or more at the operating temperature of the reactor.

10. The reactor system according to any one of the preceding claims wherein the areas that are susceptible to induction heating are placed in such a way that the temperature in the reactor is within a bandwidth of 100 K, preferably within 60 K, more preferably within 30 K of a desired temperature; and/or wherein the size and spatial distribution of the heating structures is such that the temperature in the reactor is within a bandwidth of 100 K, preferably within 60 K, more preferably within 30 K of a desired temperature.

11. The reactor system according to any one of the preceding claims wherein the solid is a catalyst and/or adsorbent in the form of particles, preferably wherein the reactor is selected from fixed bed reactors, moving bed reactors, rotating bed reactors, fluidized bed reactors and slurry reactors.

12. The reactor system according to claim 11 wherein the average diameter of the solid particles is at least a factor 2 smaller than the average diameter of the cells of the heating structures.

13. The reactor system according to any one of the preceding claims wherein the cells have a shape selected from the list consisting of circular, ellipsoidal and polygonal, preferably from the list consisting of circular, ellipsoidal, square, pentagonal, hexagonal, heptagonal and octagonal.

14. Use of one or more heating structures for heating a reactor having an inductive heating coil surrounding the reactor wherein the coil is suitable for generating an alternating magnetic field within the reactor when powered by a power source that supplies an alternating current, wherein the reactor interior comprises a solid selected from a catalyst, a sorbent, a solid reactant or a combination thereof, and wherein the heating structure is formed by connected strands of material wherein:
- the strands have a diameter of 0.5 - 100 mm,
- the network comprises areas that are susceptible to induction heating,
- the volume of the total heating structures comprised in the reactor is less than 20 vol.% of the total empty reactor volume,
- at least a part of the network is formed by strands with a thermal conductivity of 10 W·m⁻¹·K⁻¹ or more at the operating temperature of the reactor.

15. Process for performing a chemical or physical reaction or an absorption process, wherein the process is performed within the reactor system according to any one of claims 1 - 13, wherein the process involves supplying heat to the reactor by generating an alternating magnetic field within the reactor by powered the heating coil.
